**Europäisches Patentamt**

**European Patent Office**

**Office européen des brevets**

(19)

(11) Veröffentlichungsnummer : **0 064 654**
**B1**

(12) **EUROPÄISCHE PATENTSCHRIFT**

(45) Veröffentlichungstag der Patentschrift :
**17.10.84**

(21) Anmeldenummer : **82103503.7**

(22) Anmeldetag : **24.04.82**

(51) Int. Cl.³ : **A 23 L   1/221, A 23 L   1/212**

(54) **Aus Tuben abgabefähige Zubereitung von zerkleinerten Frischzwiebeln.**

(30) Priorität : **12.05.81 DE 3118810**

(43) Veröffentlichungstag der Anmeldung :
**17.11.82 Patentblatt 82/46**

(45) Bekanntmachung des Hinweises auf die Patenterteilung : **17.10.84 Patentblatt 84/42**

(84) Benannte Vertragsstaaten :
**AT BE CH FR GB IT LI NL SE**

(56) Entgegenhaltungen :
**DE-B- 1 178 685**
**DE-B- 2 924 358**
**FR-A- 1 560 736**
**FR-A- 2 185 359**
**FR-A- 2 405 659**

(73) Patentinhaber : **SOCIETE DES PRODUITS NESTLE
S.A.**
**Case postale 353**
**CH-1800 Vevey (CH)**

(72) Erfinder : **Postner, Hermann**
**Brenzstrasse 24**
**D-7140 Ludwigsburg (DE)**

# 0 064 654

## Beschreibung

Pastöse Stoffe, Mischungen und Zubereitungen können bekanntlich einfach und leicht in tubenförmige Verpackungen abgefüllt, gelagert und dann aus diesen Behältern für den Gebrauch in jeweils gewünschter Menge ausgedrückt werden. So ist es üblich, Zahnpasten immer in Tuben, welche aus Aluminium oder Kunststoff hergestellt sind, zu vertreiben. Ebenso werden Salben und Klebstoffe in Tuben dem Verbraucher zur Verfügung gestellt. Auch für Lebensmittelzubereitungen in Pastenform wie Mayonnaise, Senf, Gewürzmischungen oder Tomatenmark, ergeben sich beträchtliche Vorteile beim täglichen Gebrauch, wenn diese dem Konsumenten in Tuben zur Verfügung gestellt werden, da man den Inhalt der Tube in genau dosierter Menge den Speisen zusetzen kann, worauf die Behälter wieder dicht verschlossen werden können, so dass diese Lebensmittel gegen den Luftzutritt und Verderb wieder sicher geschützt sind.

Auch für andere Lebensmittel oder Lebensmittelzusätze, die nicht in Pastenform vorliegen, wäre die Tubenverpackung und dit damit einfach dosierbare Abgabe von grossem Vorteil. Weil diese aber nicht als Pasten vorliegen, sind derartige Versuche bisher erfolglos geblieben. So sind Zwiebeln z. B. ein in der Küche häufig verwendetes Würzmittel, das auch bereits in haltbarer, sehr unterschiedlicher Form dem Verbraucher zur Verfügung gestellt wird, um dann unmittelbar den Speisen zugesetzt zu werden. Bekannt sind Rohzwiebelsaftkonzentrate (DE-AS 17 92 366) sowie Bratzwiebelaromazubereitungen, bei denen der Saft mit Speiseöl auf 100-150 °C erhitzt wird (DE-AS 12 39 925), ebenso in Essig oder Salzwasser eingelegte rohe, gegebenenfalls kurzzeitig erhitzte, Zwiebeln (GB-PS 1 274 385). Bekannt ist ferner die Form von geschnittenen Röstzwiebeln, die eine gute Haltbarkeit aufweisen, vgl. DE-AS 12 19 782 und DE-AS 12 41 246. Durch Trocknen von zerkleinerten Zwiebeln kann auch eine Haltbarkeit erreicht werden. Bei all diesen Massnahmen wird aber der Geschmack der Zwiebeln stark verändert, so dass diese Konservierungsarten bei so empfindlichen Produkten wie Zwiebeln Nachteile besitzen.

Das Zerkleinern von frischen Zwiebeln ist unangenehm, da die flüchtigen Aromastoffe roher Zwiebeln Reizungen der Augenschleimhäute bewirken. Man hat daher seit langem Versuche durchgeführt, um fein geschnittene Zwiebeln in eine haltbare Form zu bringen. Besondere Schwierigkeiten ergeben sich hierbei deshalb, weil bei den rohen Zwiebeln die zelleigenen Fermente durch das Zerschneiden frei werden und dann bei der Lagerung zu Abbaureaktionen des Gewebes und der Aromastoffe führen. Auch ist das pflanzliche Zwiebelgewebe sehr wasserhaltig, so dass die geschnittenen Zwiebelstückchen dazu neigen, Zellwasser abzugeben, wodurch die feste Struktur verloren geht.

Aus der DE-AS 11 78 685 ist bereits die Herstellung einer gebrauchsfertigen Konserve aus frischen Zwiebeln bekannt. Hierbei werden die frisch geschälten Zwiebeln auf eine Stückgrösse von 1-10 mm Seitenlänge geschnitten, worauf diese zerkleinerte Zwiebelmasse dann zwecks Inaktivierung der Enzyme welche die Abbaureaktionen bei der Lagerung bewirken können, gepökelt wird, indem man ihr eine beträchtliche Menge von 6-12 % Speisesalz zusetzt, sowie ein Dickungsmittel, wie Pektin, und Ascorbinsäure sowie Zitronensäure. Gegebenenfalls kann noch ein Flavonderivat, z. B. Rutin, zugefügt werden. Diese Mischung soll als Konserve, d. h. in Dosen abgepackt, ausreichend haltbar sein. Durch den zur Pökelung dienenden Gehalt an Salz ist aber dieses Produkt nur beschränkt einsatzfähig.

Aufgabe der Erfindung ist es nun, eine neue Zubereitung von Frischzwiebeln in zerkleinerter Würfelform zur Verfügung zu stellen, die ohne Veränderung des Geschmacks der rohen Zwiebeln in Tuben abgefüllt haltbar ist und aus den Tuben abgegeben werden kann, ohne dass die aus den Tuben austretenden Zwiebelwürfel ihre lockere stückige Form verlieren.

Gegenstand der Erfindung ist somit eine aus Tuben abgabefähige Zubereitung von zerkleinerten Frischzwiebeln mit einem Gewichtsprozentgehalt an

a) 88 bis 92 % rohen Zwiebelwürfeln mit Kantenlänge von 3 bis 6 mm,
b) 0,05 bis 0,1 % Natriumdisulfit,
c) 0,1 bis 0,5 % Weinsäure und/oder Zitronensäure,
d) 0,05 bis 0,20 % Ascorbinsäure,
e) 0,05 bis 0,2 % eines mit Wasser quellenden Stoffes von der Art Galactomannan oder Xanthan,
f) 1 % Kochsalz
g) 3 bis 5 % Zucker oder Sorbit,
h) 3 bis 5 % Pflanzenöl und
i) 0,05 bis 0,15 % Emulgator, wie er für Mayonnaisezubereitungen üblich ist.

In einer besonderen Ausführungsform enthält die Zubereitung auch eine geringe Menge Zwiebelextrakt zum Aromaausgleich.

Gegenstand der Erfindung ist auch ein Verfahren zur Herstellung der soeben definierten Zubereitung, wobei man

I) Bestandteil a) unter vorsichtigem, strukturschonenden Mischen mit einer Trockenvormischung aus den Bestandteilen b) bis g) versetzt,

2

II) eine vorbereitete Mischung aus den Bestandteilen h), i) und gegebenenfalls k) zumischt,

III) die erhaltene Masse in Tuben abfüllt und

IV) diese Tuben nach dem Verschliessen kurzzeitig auf 70 bis 80 °C pasteurisiert.

Das erfindungsgemässe Verfahren führt man in der Praxis so durch, dass man die rohen Zwiebeln zu der angegebenen Würfelform, vorzugsweise zu Würfeln mit einer Grösse von etwa 6 × 6 × 3 mm, zerkleinert, worauf diese Würfelmasse dann unter vorsichtigem, strukturschoenenden Vermischen mit den Bestandteilen b) bis g) versetzt wird. Man verwendet, bezogen auf die Endmischung, 88-92 % Zwiebeln, 0,05-0,1 % trockenes Natriumdisulfit ($Na_2S_2O_5$), 0,05-0,2 % Ascorbinsäure, 0,1-0,5 % Weinsäure und/oder Zitronensäure, 0,05-0,2 % Quellstoff von der Art Galactomannan oder Xanthan, in pulverisierter Form, sowie 3-5 % Zucker oder Sorbit, und 1 % NaCl zur Verbesserung des Geschmacks. Durch diese Zusätze wird der pH-Wert auf unter 4,0 abgesenkt. Anschliessend werden 3 bis 5 % einer Fettmischung aus Pflanzenöl, wie Sojaöl, und 0,05-0,15 % Emulgator, wie er für Mayonnaisezubereitungen üblich ist, hinzugefügt. Gegebenenfalls kann diese Mischung noch eine geringe Menge eines Zwiebelextrakts einemulgiert enthalten, zum Ausgleich des vorhandenen je nach Provenienz und Sorte unterschiedlich starken Aromagehalts der Frischzwiebeln. Die so erhaltene Frischzwiebelzubereitung wird dann in Tuben mittlerer Grösse von 200-300 cm³ Inhalt eingefüllt, worauf kurzzeitig auf 70-80 °C erhitzt und pasteurisiert wird. Das Produkt ist ohne Verfärbung und Geschmacksveränderung längere Zeit, d. h. bis mehr als 6 Monate, haltbar. Beim Auspressen aus der Tube behalten die Würfel ihre Form bei und haben das Aussehen von frisch geschnittenen Zwiebeln.

Die für die Verpackung verwendeten Tuben sollen eine Austrittsöffnung mit Durchmesser von etwa 1-1,5 cm aufweisen, was etwa der 2- bis 3-fachen Kantenlänge der geschnittenen Zwiebelwürfel entspricht.

Die erfindungsgemässe Zwiebelzubereitung mit den Frischzwiebel-würfeln ist genauso verwendbar wie frisch geschnittene oder gehackte Zwiebeln, z. B. für die Zubereitung von Tartar, in Salaten oder Sossen. Durch die Erfindung wird daher ein seit langem bestehendes Problem in überraschender einfacher und sicherer Weise gelöst. Das unangenehme, mit Tränenreizung verbundene Schneiden der rohen Zwiebeln entfällt für den Verbraucher. Er erhält ein Produkt, das von unmittelbar hergestellten fein geschnittenen Rohzwiebeln nicht zu unterscheiden ist, da die erfindungsgemäss zu verwendende Fettmischung nur in relativ geringer Menge vorhanden ist und dennoch die gewünschte konservierende und formstabilisierende Wirkung auf die Würfelteilchen ausübt. Es war auch nicht vorhersehbar, dass die zur Haltbarmachung notwendige Pasteurisierung der Zwiebelzubereitung diese nicht doch so verändert, dass die Würfel beim Auspressen aus der Tube durch den Pressdruck ihre lockere Form verlieren. Eventuell bei der kurzzeitigen Hitzebehandlung sich absonderndes Zwiebelwasser wird durch die Kombination der Zusatzstoffe gebunden, so dass sich keine flüssige Phase bildet. Im Gegensatz zu den bekannten Zwiebelzubereitungen wird die Haltbarmachung nicht durch eine relativ hohe, pökelnd wirkende Salzkonzentration oder grössere Mengen an Säure erreicht, sondern die Stabilität gegen enzymatischen und auch mikrobiellen Verderb sowie gegen Konsistenz- und Aromaverlust wird durch die funktionelle Kombination von milder Pasteurisierung und nur schwache Absenkung des pH-Werts mittels relativ geringer Mengen bestimmter organischer Säuren in Verbindung mit dem ebenfalls nur in geringer Menge vorhandenen Öl erreicht.

## Beispiel

Ganze, geschälte Zwiebeln, die bei 0 bis 5 °C gelagert worden waren, werden in einer Holac Typ VA 120 Schnitzelmaschine der Ernst Holz Maschinenbau GmbH in Heidenheim, oder in einer Schnitzelmaschine der August Herbort GmbH in Braunschweig oder in einem sogenannten Urschel-Dicer Modell SL-A der Urschel Laboratories Inc. in Valparaiso, Indiana, USA zu Würfeln von 6 × 6 × 3 mm geschnitten. Zu 90 kg dieser geschnittenen Zwiebeln wird dann in einem Chargen-Mischer eine trockene Vormischung aus 80 g Natriumdisulfit, 270 g Weinsäure, 150 g Zitronensäure, 100 g fein pulverisierte Mischung aus Galaktomannan und Xanthan (1 : 1), 1 000 g Kochsalz und 3 800 g Zucker hinzugefügt und 3 Minuten lang vermischt und anschliessend mit der Fettmischung aus 4 400 g Pflanzenöl (Sojabohnenöl), 100 g handelsübliches Monoglycerid und 100 g Zwiebelextrakt, die in einem Rührer intensiv emulgiert worden war, versetzt. Die Mischzeit soll zur Vermeidung einer Texturverschlechterung höchstens 3-5 Minuten betragen.

Die so erhaltene Mischung wird in Aluminiumtuben mit 40 mm Durchmesser und in einer Menge von 250 cm³ eingefüllt, das rückwärtige Tubenende in üblicher Weise verschlossen, worauf in einem Autoklaven unter Wasser oder Dampf bei 80 °C pasteurisiert wird. Nach dem Pasteurisieren wird rückgekühlt.

Bei Bedarf an Frischzwiebeln wird die Tubenöffnung so aufgeschnitten, dass keine scharfen Ränder entstehen und der Inhalt in gewünschter Menge ausgepresst. Die Zwiebelwürfel treten hierbei aus der Tubenöffnung locker aus und sind hell gefärbt wie die Original-Frischzwiebelwürfel. Nach dem Verschliessen der Tube ist der Inhalt weiter gut haltbar und zeigt auch bei längerem Lagern keine Veränderung, insbesondere keine Abscheidung einer wässrigen Phase oder Verfärbung.

3

# 0 064 654

## Ansprüche

1. Aus Tuben abgabefähige Zubereitung von zerkleinerten Frischzwiebeln, gekennzeichnet durch einen Gewichtsprozentgehalt an

a) 88 bis 92 % rohen Zwiebelwürfeln mit Kantenlänge von 3 bis 6 mm,
b) 0,05 bis 0,1 % Natriumdisulfit,
c) 0,1 bis 0,5 % Weinsäure und/oder Zitronensäure,
d) 0,05 bis 0,20 % Ascorbinsäure,
e) 0,05 bis 0,2 % eines mit Wasser quellenden Stoffes von der Art Galactomannan oder Xanthan,
f) 1 % Kochsalz
g) 3 bis 5 % Zucker oder Sorbit,
h) 3 bis 5 % Pflanzenöl und
i) 0,05 bis 0,15 % Emulgator, wie er für Mayonnaisezubereitungen üblich ist.

2. Zwiebelzubereitung nach Anspruch 1, dadurch gekennzeichnet, dass sie zum Aromaausgleich noch

k) eine geringe Menge Zwiebelextrakt enthält.

3. Verfahren zur Herstellung der Zubereitung nach Anspruch 1 bis 2, dadurch gekennzeichnet, dass man unter Einhaltung der im Anspruch 1 angegebenen Gewichtsverhältnisse

I) Bestandteil a) unter vorsichtigem, strukturschonenden Mischen mit einer Trockenvormischung aus den Bestandteilen b) bis g) versetzt,
II) eine vorbereitete Mischung aus den Bestandteilen h), i) und gegebenenfalls k) zumischt,
III) die erhaltene Masse in Tuben abfüllt und
IV) diese Tuben nach dem Verschliessen kurzzeitig auf 70 bis 80 °C pasteurisiert.

## Claims

1. Preparation of comminuted fresh onions which can be dispensed from tubes, characterised by a weight percentage content of

a) 88 to 92 % of raw onion cubes with 3 to 6 mm edge length,
b) 0.05 to 0.1 % sodium disulfide,
c) 0.1 to 0.5 % tartaric acid and/or citric acid,
d) 0.05 to 0.20 % ascorbic acid,
e) 0.05 to 0.2 % of a substance swelling in water like galactomannan or xanthan,
f) 1 % cooking salt
g) 3 to 5 % sugar or sorbitol
h) 3 to 5 % plant oil
i) 0.05 to 0.15 % emulgator of the kind used in mayonnaise preparations.

2. Preparation of onions according to claim 1, characterised in that it contains also, to round off the aroma

k) a small amount of onion extract.

3. Process for the manufacture of the preparation according to claims 1 to 2, characterised in that, keeping the weight proportions of claim 1,

I) component a) is delicately mixed, while respecting the structure, with a dry premix of components b) to g),
II) a prepared mixture of components h), i) and as the case may be k) is added,
III) the obtained mass is filled into tubes and
IV) these tubes are closed and for a short time pasteurised to 70 to 80 °C.

## Revendications

1. Préparation d'oignons frais divisés susceptible d'être dispensée à partir de tubes, caractérisée par le fait qu'elle contient en pourcentages pondéraux

4

**0 064 654**

a) 88 à 92 % d'oignons crus en cubes de 3 à 6 mm de côté
b) 0,05 à 0,1 % de bisulfite de sodium
c) 0,1 à 0,5 % d'acide tartrique et/ou d'acide citrique
d) 0,05 à 0,2 % d'acide ascorbique
e) 0,05 bis 0,2 % d'une substance gonflant dans l'eau du genre galactomannane ou xanthane
f) 1 % de sel de cuisine
g) 3 à 5 % de sucre ou de sorbitol
h) 3 à 5 % d'huile végétale et
i) 0,05 à 0,15 d'un émulsifiant usuel pour les préparations de mayonnaise.

2. Préparation d'oignons selon la revendication 1, caractérisée par le fait qu'elle comprend encore, pour arrondir l'arôme,

k) une petite quantité d'extrait d'oignon.

3. Procédé de fabrication de la préparation selon les revendications 1 à 2, caractérisé par le fait que dans les limites des proportions pondérales indiquées dans la revendication 1

I) on mélange délicatement, en ménageant la structure, le composant a) avec un mélange préalable à sec des composants b) à g),
II) on ajoute un mélange préparé des composants h), i) et le cas échéant k),
III) on remplit des tubes avec la masse obtenue et
IV) après leur fermeture, on pasteurise brièvement ces tubes à 70 à 80 °C.

5